# EUROPÄISCHE PATENTSCHRIFT

(11) **EP 2 127 990 B1**
(45) Veröffentlichungstag und Bekanntmachung des Hinweises auf die Patenterteilung: **20.06.2012**
(21) Anmeldenummer: 09450083.2
(22) Anmeldetag: 20.04.2009
(51) Int. Cl.: B61B 12/06, B61B 12/02

(54) **Vorrichtung zum Erkennen einer Fehllage eines Tragseils einer Seilbahn**
Device for recognising an incorrect position of a bearer cable of a telpher
Dispositif de reconnaissance d'une position erronée d'un câble de téléphérique

(30) Priorität: 27.05.2008 AT 8472008
(43) Veröffentlichungstag der Anmeldung: 02.12.2009
(73) Patentinhaber: Innova Patent GmbH, 6960 Wolfurt (AT)
(72) Erfinder: Luger, Peter, 6850 Dornbirn (AT); Gisler, Josef, 3612 Steffisburg (CH)
(74) Vertreter: Hehenberger, Reinhard

(56) Entgegenhaltungen:
- AT-B- 226 772
- AT-B- 390 926
- AT-B- 405 387

## Beschreibung

Vorrichtung an einer Seilbahn oder einer Förderanlage für Güter zum Erkennen einer Fehllage eines Tragseils an einer Halterung mit einer Rille, in welcher das Tragseil liegt, und mit einer Einrichtung zum Erkennen einer Fehllage des Tragseiles.

Aus der AT 226 772 B, der AT 390 926 B und der AT 405 387B sind vorrichtungen bekannt, mit welchen eine Fehllage eines auf eines Seilrolle Laufenden Seites noch vor einer vollständigen Entgleisung erkannt werden kann.

Tragseile von Seilbahnen zur Personenbeförderung aber auch von Materialseilbahnen oder Förderanlagen für Güter (z.B. EP 1 538 112 A), bei welchen die vorliegende Erfindung anwendbar ist, werden im Stand der Technik beispielsweise auf Stützen über Sättel bzw. Tragseilschuhe geführt, auf welchen sie in einer Halterung mit einer nach oben offenen Rille liegen. Auf diesem oder diesen Tragseilen fahren Fahrbetriebsmittel wie Kabinen oder Förderbänder entlang. In der Rille wird das Tragseil je nach Länge des Sattels mit einer oder mehreren Klemmen gegen Entgleisen gesichert. Im Bereich vor und nach diesen Klemmen, in welchem das Tragseil im unbelasteten Zustand teilweise überhaupt nicht und im durch ein Fahrbetriebsmittel, z.B. eine Kabine, belasteten Zustand nur lose in der Rille liegt, kann das Tragseil entgleisen, indem es beispielsweise durch Wind seitlich auslenkt, sodass es aus der Rille gehoben wird und neben der Halterung zu liegen kommt. Um zu verhindern, dass das Tragseil vollständig vom Sattel fällt, sind neben der Halterung sogenannte Tragseilfänger angebracht, welche auch mit einem Detektor ausgerüstet oder mit einem Detektor verbunden sein können, um ein entgleistes Tragseil zu erkennen und die Anlage abzuschalten.

Solange das Tragseil unbelastet ist, befindet sich ein bereits entgleistes Tragseil aber oft noch nicht in Kontakt mit dem Tragseilfänger bzw. dem Detektor, so dass eine Fehllage des Tragseils erst erkannt wird, wenn das Tragseil unter dem Gewicht des sich schon relativ nah befindlichen Fahrbetriebsmittels soweit nach unten gedrückt wird, bis es auf einem Tragseilfänger aufliegt und der Detektor die Fehllage des Tragseils meldet.

In dieser Situation ist es aber häufig bereits schwierig, das oder die Fahrbetriebsmittel in eine Station der Seilbahnanlage zurückzubefördern um die Fahrgäste sicher aussteigen lassen zu können und das Tragseil wieder korrekt auf den Sattel aufzulegen. Außerdem kann es bereits zu Beschädigungen des Tragseils oder des Sattels gekommen sein. Auch Unfälle sind in dieser Situation möglich.

Der Erfindung liegt daher die Aufgabe zu Grunde, eine Vorrichtung für einen Seilschuh zu schaffen, welche bereits frühzeitig eine Fehllage.des Tragseils erkennen lässt.

Gelöst wird diese Aufgabe mit einer Vorrichtung mit den Merkmalen des Patentanspruchs 1.

Bei der Erfindung ist ein Abschnitt der Halterung, in deren Rille das Tragseil liegt, beweglich, so dass eine Fehllage des Tragseils, welche zu einer Verschiebung dieses Abschnittes führt, schon frühzeitig erkannt werden kann, noch bevor das Tragseil in diesem Abschnitt vollständig entgleist ist.

Die Art und Weise, auf welche die Bewegung bzw. Lageänderung des beweglichen Abschnitts der Halterung erfasst wird, kann auf verschiedene Weise erfolgen. Es sind beispielsweise alle bekannten Einrichtungen der Messtechnik und Elektrotechnik zum Erkennen einer Lage-, Druck- oder Kraftänderung verwendbar. Eine einfache Möglichkeit wäre beispielsweise eine elektromagnetische oder eine optische Kopplung des Abschnittes mit der Einrichtung zum Erkennen einer Fehllage des Tragseiles.

Bevorzugt ist im Rahmen der Erfindung allerdings, dass die Einrichtung zum Erkennen einer Fehllage des Tragseiles mechanisch mit dem beweglichen Abschnitt der Halterung verbunden ist, da es sich dabei um eine erprobte und sehr robuste und auch unter schwierigen Witterungsbedingungen funktionierende Lösung handelt.

In Weiterbildung der Erfindung kann dabei vorgesehen sein, dass die Einrichtung zum Erkennen einer Fehllage des Tragseiles einen Bruchstab aufweist, der von einem mit dem beweglichen Abschnitt der Halterung verbundenen Hebel abgebrochen wird, wenn die Lageänderung des beweglichen Abschnitts der Halterung einen vorgegebenen Wert überschreitet. Der Bruchstab kann aber auch vom beweglichen Abschnitt selbst abgebrochen werden.

Um die Beweglichkeit des beweglichen Abschnitts der Halterung zu realisieren, kann der bewegliche Abschnitt der Halterung um eine Drehachse verschwenkbar gelagert sein. Es ist auch möglich, dass der bewegliche Abschnitt der Halterung entlang einer Gleitfläche verschiebbar ist. Wenn die Gleitfläche in einer besonders bevorzugten Ausführungsform der Erfindung von einem Kreiszylinderabschnitt gebildet ist, wird der bewegliche Abschnitt der Halterung letztlich wieder um eine Achse verschwenkt, welche mit dem Krümmungsmittelpunkt der Gleitfläche zusammenfällt. Es sind aber auch andere Formen von gekrümmten Gleitflächen denkbar, welche keine einheitliche Schwenkachse für den beweglichen Abschnitt der Halterung definieren.

Der bewegliche Abschnitt der Halterung liegt erfindungsgemäß bevorzugt in einem Bereich der Halterung, welcher sowohl von einem Ende der Halterung als auch von einer Klemme beabstandet ist und insbesondere zwischen einem Ende der Halterung und einer Klemme für das Tragseil. Der Grund liegt darin, dass das Tragseil in den meisten Fällen im unbelasteten Zustand nicht bis ans Ende der Halterung in der Rille liegt, so dass eine Fehllage des Tragseils auch nicht erkannt werden könnte. Dennoch ist es natürlich möglich, dass insbesondere in den Fällen, in welchen mehr als ein beweglicher Abschnitt an einer Halterung vorgesehen ist, auch am Ende einer Halterung ein beweglicher Abschnitt vorgesehen ist.

Weitere Merkmale und Vorteile der Erfindung ergeben sich aus der nachfolgenden Beschreibung eines bevorzugten Ausführungsbeispiels der Erfindung unter Bezugnahme auf die Zeichnungen.

Es zeigt:
- Fig. 1: einen Teil eines Sattels für ein Tragseil einer Seilbahn mit einem teilweise entgleisten Tragseil in Draufsicht,
- Fig. 2: den Teil des Sattels von Fig. 1 in Schrägansicht von der Seite,
- Fig. 3: einen beweglichen Abschnitt der Halterung für das Tragseil in Schrägansicht im Detail im nicht ausgelösten Zustand, und
- Fig. 4: den Abschnitt von Fig. 3 im ausgelösten Zustand.

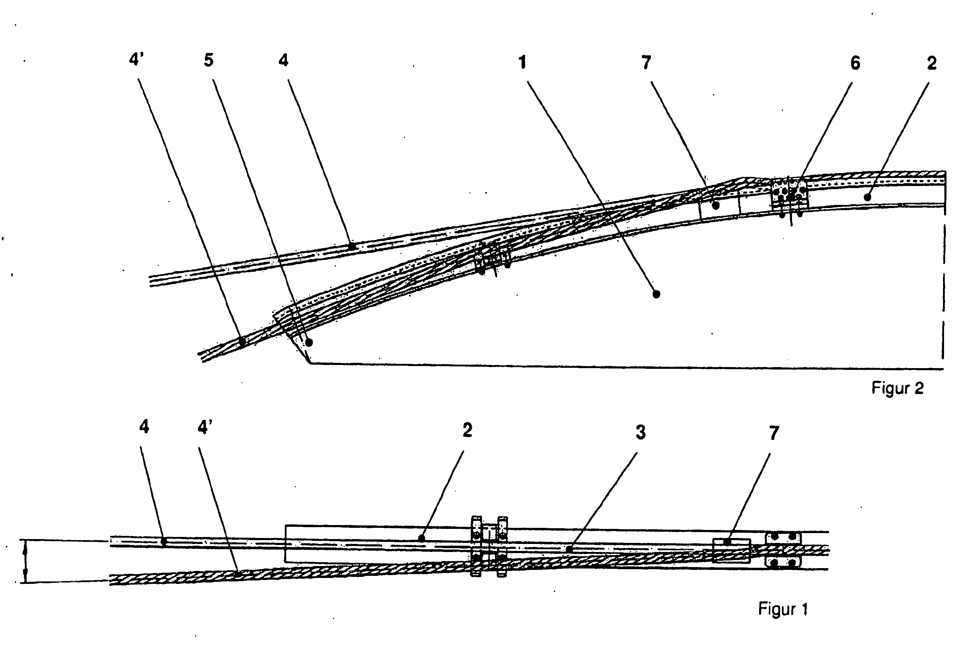

In Fig. 1 ist ein Teil eines Sattels in Draufsicht dargestellt. Es ist eine Halterung 2 zu sehen, welche eine in Einbaulage nach oben offenen Rille 3 aufweist, in welcher ein Tragseil 4 liegt. Wie Fig. 2 zeigt, liegt das Tragseil 4 im unbelasteten Zustand nicht bis zum Ende 5 der Halterung 2 in der Rille 3, sondern nur im mittleren Bereich. Mit dem Bezugszeichen 4' ist in den Fig. 1 und 2 die Lage des Tragseils 4 in einer so genannten Fehllage dargestellt, in welcher das Tragseil 4' teilweise entgleist ist, d.h., dass es nicht mehr korrekt in bzw. über der Rille 3 liegt.

An der Halterung 2 sind Klemmen 6 sowie Tragseilfänger angebracht, die aber natürlich nicht immer vorhanden sein müssen. Die Klemmen 6 im Mittelbereich verhindern ein weiteres Entgleisen des Tragseils 4 an der Halterung. Die Tragseilfänger dienen zum Fangen des Tragseils 4, wenn es auf Grund widriger Bedingungen zu einer Entgleisung des Tragseils 4' zwischen dem Ende 5 der Halterung 2 und der Klemme 6 kommt.

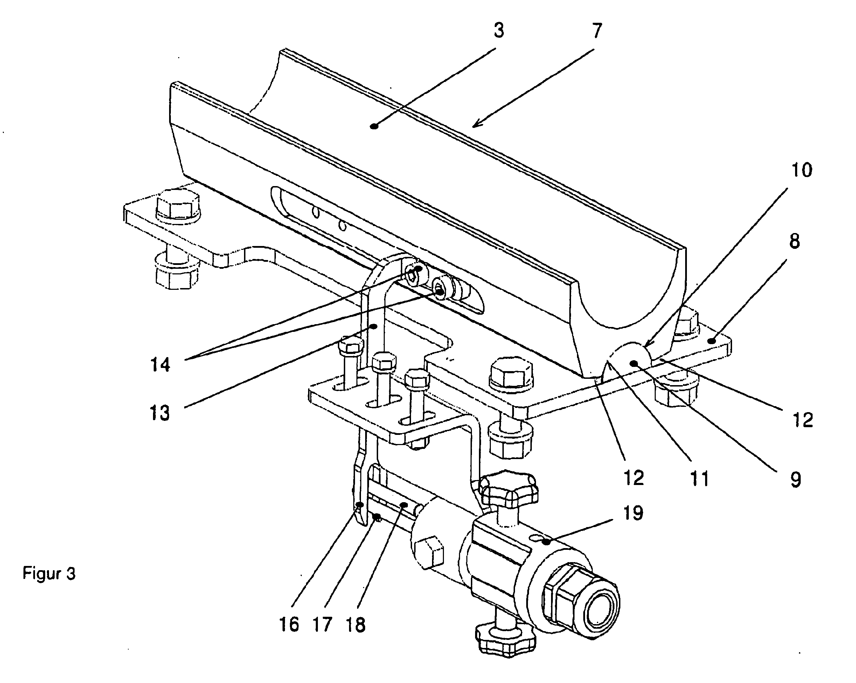

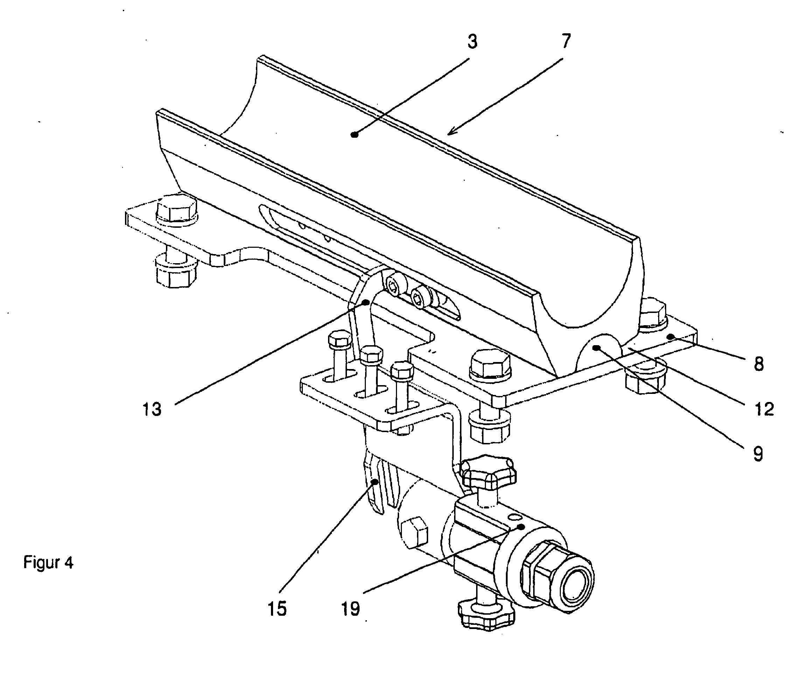

Zwischen der Klemme 6 und dem Ende 5 der Halterung 2 ist ein beweglicher Abschnitt 7 der Halterung 2 angeordnet, der in den Fig. 3 und 4 im Detail dargestellt ist und bei korrekter Lage des Tragseils 4 die in Fig. 3 dargestellte Lage und bei einer Fehllage des Tragseils 4' die in Fig. 4 dargestellte Lage einnimmt.

Der in den Fig. 3 und 4 dargestellte Abschnitt 7 der Halterung 2 weist im Wesentlichen die gleiche Querschnittsform wie die übrigen Abschnitte der Halterung 2 auf, ist aber nicht fest an einer Montageplatte befestigt sondern beweglich an einer Gelenkplatte 8. Die Beweglichkeit des beweglichen Abschnitts 7 wird im dargestellten Ausführungsbeispiel mit Hilfe einer an der Gelenkplatte angeordneten Rippe 9 realisiert, welche eine dem beweglichen Abschnitt 7 zugewandte Gleitfläche 10 aufweist. Die Gleitfläche 10 weist die geometrische Form eines Kreiszylinderabschnittes auf, ebenso wie die Gegenfläche 11 am beweglichen Abschnitt 7. Da der bewegliche Abschnitt 7 zu beiden Seiten der Rippe 9 von der Gelenkplatte 8 durch einen Spalt 12 beabstandet ist, kann der bewegliche Abschnitt 7 entlang der Gleitfläche 10, 11 seitlich verschoben werden, bis er an der Gelenkplatte 8 anliegt. Der Drehpunkt bzw. die Drehachse der Bewegung des beweglichen Abschnitts 7 liegt im geometrischen Mittelpunkt der Gleitflächen 10, 11.

An Stelle einer Rippe 9 an der Gelenkplatte 8 , an welcher der Abschnitt 7 gleitet, könnte beispielsweise auch der Abschnitt 7 selbst in Längsrichtung geteilt sein und ein oberer. Teil des Abschnitts 7 an einem unteren Teil gleiten. Es könnte aber auch ein ganz gewöhnliches Gelenk zwischen dem Abschnitt 7 und der Gelenkplatte 8 mit einem Gelenkbolzen und zwei oder mehreren Lagerbuchsen verwendet werden, dessen Gelenkachse im Wesentlichen parallel zur Tragseilachse verläuft.

Beginnt das Tragseil 4 aufgrund äußerer Kräfte aus der Rille 3 zu gleiten, wie dies in Fig. 1 und 2 dargestellt ist, wird der bewegliche Abschnitt 7 umso weiter zur Seite gekippt, je weiter das Tragseil 4 im Bereich des beweglichen Abschnitts 7 aus der Rille 3 gleitet. Am beweglichen Abschnitt 7 ist ein Hebel 13 befestigt, im dargestellten Ausführungsbeispiel mit Hilfe von zwei Schrauben 14 angeschraubt, der im Bereich seines freien Endes 15 eine Gabelung aufweist. Zwischen den beiden Fingern 16, 17 ist ein U-förmig gebogener Bruchstab 18 aufgenommen, der an einer Einrichtung zum Erkennen einer Fehllage des Tragseils 4 in Form eines so genannten Bruchstabschalters 19 angebracht ist. Der Bruchstab 18 wird von Strom durchflossen, wobei der Stromfluss unterbrochen wird, wenn der Bruchstab 18 bricht.

Wird der bewegliche Abschnitt 7 durch eine Fehllage des Tragseils 4 auf die eine oder andere Seite hin bewegt, wird auch der daran befestigte Hebel 13 zur Seite bewegt. Zwischen den Fingern 16, 17 und dem Bruchstab 18 ist ein geringer Abstand vorhanden, wobei durch die Größe dieses Abstandes die zulässige Lageabweichung des beweglichen Abschnitts 7 definiert werden kann. Wird diese zulässige Lageabweichung überschritten, wird der Bruchstab 18 von einem der beiden Fingern 16 oder 17 zur Seite gebogen, bis er nach Überschreitung eines gewissen elastischen Formänderungsvermögens bricht. Dadurch wird der Stromfluss unterbrochen und der Bruchstabschalter 19 detektiert eine sicherheitsrelevante Lageänderung des beweglichen Abschnitts 7 und sendet ein entsprechendes Signal an die zentrale Steuerung der Seilbahnanlage, welche entsprechend den Sicherheitsbestimmungen die Fahrgeschwindigkeit des Fahrbetriebsmittels entweder verringert oder dieses anhält.

Da mit der erfindungsgemäßen Vorrichtung im Gegensatz zum Stand der Technik eine Fehllage des Tragseils 4 bereits erkannt werden kann ohne dass sich ein Fahrbetriebsmittel dem Seilschuh annähern muss, können eine vollständige Entgleisung verhindert und unter Umständen allfällige Folgeschäden vermieden werden.

## Patentansprüche

1. Vorrichtung an einer Seilbahn oder einer Förderanlage für Güter zum Erkennen einer Fehllage eines Tragseils (4) an einer Halterung (2) mit einer Rille (3), in welcher das Tragseil (4) liegt, und mit einer Einrichtung (18, 19) zum Erkennen einer Fehllage des Tragseiles (4), **dadurch gekennzeichnet, dass** ein Abschnitt (7) der Halterung (2) beweglich ist und dass die Einrichtung (18, 19) zum Erkennen der Fehllage des Tragseiles (4) eine durch die Fehllage des Tragseiler (4) versursachte Bewegung des Abschnittes (7) der Halterung (2) erkennt.

2. Vorrichtung nach Anspruch 1, **dadurch gekennzeichnet, dass** die Einrichtung (18, 19) mechanisch mit dem beweglichen Abschnitt (7) der Halterung (2) gekoppelt ist.

3. Vorrichtung nach Anspruch 1 oder 2, **dadurch gekennzeichnet, dass** die Einrichtung (18, 19) einen Bruchstab (18) aufweist, der vom beweglichen Abschnitt (7) der Halterung (2) abgebrochen wird, wenn die Lageänderung des beweglichen Abschnitts (7) der Halterung (2) einen vorgegebenen Wert überschreitet.

4. Vorrichtung nach Anspruch 2, **dadurch gekennzeichnet, dass** die Einrichtung (18, 19) einen Bruchstab (18) aufweist, der von einem mit dem beweglichen Abschnitt (7) der Halterung (2) verbundenen Hebel (13) abgebrochen wird, wenn die Lageänderung des beweglichen Abschnitts (7) der Halterung (2) einen vorgegebenen Wert überschreitet.

5. Vorrichtung nach Anspruch 1, **dadurch gekennzeichnet, dass** die Einrichtung (18, 19) elektrisch oder elektromagnetisch mit dem beweglichen Abschnitt (7) der Halterung (2) verbunden ist.

6. Vorrichtung nach Anspruch 1, **dadurch gekennzeichnet, dass** die Einrichtung (18, 19) optisch mit dem beweglichen Abschnitt (7) der Halterung (2) verbunden ist.

7. Vorrichtung nach einem der Ansprüche 1 bis 5, **dadurch gekennzeichnet, dass** der bewegliche Abschnitt (7) der Halterung (2) um eine Drehachse verschwenkbar gelagert ist.

8. Vorrichtung nach Anspruch 7, **dadurch gekennzeichnet, dass** die Drehachse in Längsrichtung des Tragseils (4) ausgerichtet und in Einbaulage unterhalb der Rille (3) angeordnet ist.

9. Vorrichtung nach einem der Ansprüche 1 bis 6, **dadurch gekennzeichnet**, das der bewegliche Abschnitt (7) der Halterung (2) entlang einer Gleitfläche (10, 11) verschiebbar ist.

10. Vorrichtung nach Anspruch 9, **dadurch gekennzeichnet, dass** die Gleitfläche (10, 11) gekrümmt ist.

11. Vorrichtung nach Anspruch 10, **dadurch gekennzeichnet, dass** die Gleitfläche (10, 11) von einem Kreiszylinderabschnitt gebildet ist.

12. Vorrichtung nach Anspruch 10 oder 11, **dadurch gekennzeichnet, dass** die Krümmungsachse der Gleitfläche (10, 11) in Einbaulage vertikal unter der Krümmungsachse der Rille (3) liegt.

13. Vorrichtung nach einem der Ansprüche 1 bis 12, **dadurch gekennzeichnet, dass** der bewegliche Abschnitt (7) der Halterung (2) von einem Ende (5) der Halterung (2) beabstandet ist.

14. Vorrichtung nach einem der Ansprüche 1 bis 13, **dadurch gekennzeichnet, dass** der bewegliche Abschnitt (7) der halterung (2) zwischen einem Ende (5) der Halterung (2) und einer Klemme (6) für das Tragseil (4) liegt.

15. Tragseilschuh für ein Tragseil (4) einer Seilbahn, **dadurch gekennzeichnet, dass** am Tragseilschuh eine Vorrichtung nach einem der Ansprüche 1 bis 14 angeordnet ist.

## Claims

1. Arrangement on a cableway or a goods-conveying system for detecting an incorrect positioning of a carrying cable (4) on a mount (2) with a channel (3) in which the carrying cable (4) is located, and having a device (18, 19), for detecting an incorrect positioning of the carrying cable (4), **characterized in that** a portion (7) of the mount (2) is movable, and **in that** the device (18, 19) for detecting the incorrect positioning of the carrying cable (4) detects movement, caused by the incorrect positioning of the carrying cable (4), of the portion (7) of the mount (2).

2. Arrangement as claimed in claim 1, **characterized in that** the device (18, 19) is coupled mechanically to the movable portion (7) of the mount (2).

3. Arrangement as claimed in claim 1 or 2, **characterized in that** the device (18, 19) comprises a breakage rod (18) which, when the change in position of the movable portion (7) of the mount (2) exceeds a predetermined value, is broken off from the movable portion (7) of the mount (2).

4. Arrangement as claimed in claim 2, **characterized in that** the device (18, 19) comprises a breakage rod (18) which, when the change in position of the movable portion (7) of the mount (2) exceeds a predetermined value, is broken off from a lever (13) which is connected to the movable portion (7) of the mount (2).

5. Arrangement as claimed in claim 1, **characterized in that** the device (18, 19) is connected electrically or electromagnetically to the movable portion (7) of the mount (2).

6. Arrangement as claimed in claim 1, **characterized in that** the device (18, 19) is connected optically to the movable portion (7) of the mount (2).

7. Arrangement as claimed in one of claims 1 to 5, **characterized in that** the movable portion (7) of the mount (2) can be pivoted about an axis of rotation.

8. Arrangement as claimed in claim 7, **characterized in that** the axis of rotation is oriented in the longitudinal direction of the carrying cable (4) and, in the installed position, is arranged beneath the channel (3).

9. Arrangement as claimed in one of claims 1 to 6, **characterized in that** the movable portion (7) of the mount (2) can be displaced along a sliding surface (10, 11).

10. Arrangement as claimed in claim 9, **characterized in that** the sliding surface (10, 11) is curved.

11. Arrangement as claimed in claim 10, **characterized in that** the sliding surface (10, 11) is formed by a circular-cylinder portion.

12. Arrangement as claimed in claim 10 or 11, **characterized in that** the axis of curvature of the sliding surface (10, 11), in the installed position, is located vertically beneath the axis of curvature of the channel (3).

13. Arrangement as claimed in one of claims 1 to 12, **characterized in that** the movable portion (7) of the mount (2) is spaced apart from one end (5) of the mount (2).

14. Arrangement as claimed in one of claims 1 to 13, **characterized in that** the movable portion (7) of the mount (2) is located between one end (5) of the mount (2) and a clamp (6) for the carrying cable (4).

15. Shoe for a carrying cable (4) of a cableway, **characterized in that** an arrangement as claimed in one of claims 1 to 14 is arranged on the carrying-cable shoe.

## Revendications

1. Dispositif sur un convoyeur aérien ou une installation de transport pour marchandises destiné à détecter une mauvaise position d'un câble porteur (4) sur un support (2) avec une rainure (3), dans laquelle le câble porteur (4) est disposé, et avec une installation (18, 19) destiné à identifier une mauvaise position du câble porteur (4), **caractérisé en qu'**une partie (7) du support (2) est mobile et en ce que l'installation (18, 19) destiné à identifier la mauvaise position du câble porteur (4) détecte un mouvement, provoqué par la mauvaise position du câble porteur (4), de la partie (7) du support (2).

2. Dispositif selon la revendication 1, **caractérisé en ce que** l'installation (18, 19) est couplé mécaniquement avec la partie (7) mobile du support (2).

3. Dispositif selon la revendication 1 ou 2, **caractérisé en ce que** l'installation (18, 19) présente une barre de rupture (18) qui est coupée de la partie (7) mobile du support (2) lorsque la variation en position de la partie (7) mobile du support (2) dépasse une valeur prédéfinie.

4. Dispositif selon la revendication 2, **caractérisé en ce que** l'installation (18, 19) présente une barre de rupture (18), qui est coupée d'un levier (13) relié à la partie (7) mobile du support (2) lorsque la variation en position de la partie (7) mobile du support (2) dépasse une valeur prédéfinie.

5. Dispositif selon la revendication 1, **caractérisé en ce que** l'installation (18, 19) est relié de façon électrique ou électromagnétique à la partie (7) mobile du support (2).

6. Dispositif selon la revendication 1, **caractérisé en ce que** l'installation (18, 19) est relié au plan optique à la partie (7) mobile du support (2).

7. Dispositif selon l'une des revendications 1 à 5, **caractérisé en ce que** la partie (7) mobile du support (2) est montée de façon à pouvoir basculer autour d'un axe de rotation.

8. Dispositif selon la revendication 7, **caractérisé en ce que** l'axe de rotation est orienté dans le sens longitudinal du câble porteur (4) et est disposé, dans la position de montage, au-dessous de la rainure (3).

9. Dispositif selon l'une des revendications 1 à 6, **caractérisé en ce que** la partie (7) mobile du support (2) peut coulisser le long d'une surface de glissement (10, 11).

10. Dispositif selon la revendication 9, **caractérisé en ce que** la surface de glissement (10, 11) est incurvée.

11. Dispositif selon la revendication 10, **caractérisé en ce que** la surface de glissement (10, 11) est formée par une partie cylindrique circulaire.

12. Dispositif selon la revendication 10 et 11, **caractérisé en ce que** l'axe de courbure de la surface de glissement (10, 11) est situé, dans la position de montage, verticalement au-dessous de l'axe de courbure de la rainure (3).

13. Dispositif selon l'une des revendications 1 à 12, **caractérisé en ce que** la partie (7) mobile du support (2) est espacée d'une extrémité (5) du support (2).

14. Dispositif selon l'une des revendications 1 à 13, **caractérisé en ce que** la partie (7) mobile du support (2) est située entre une extrémité (5) du support (2) et une pince (6) pour le câble porteur (4).

15. Sabot de caloporteur pour un câble (4) d'un convoyeur aérien, **caractérisé en ce qu'**un dispositif selon l'une des revendications 1 à 14 est disposé sur le sabot de câble porteur.
